## Europäisches Patentamt
## European Patent Office
## Office européen des brevets

(19)

(11) Publication number: **0 066 381**
**B1**

(12)

# EUROPEAN PATENT SPECIFICATION

(45) Date of publication of patent specification: 18.07.84

(51) Int. Cl.³: **F 16 H 3/08, B 60 K 17/08**

(21) Application number: **82302361.9**

(22) Date of filing: **10.05.82**

(54) Motor vehicle transmissions.

(30) Priority: **14.05.81 JP 71380/81**

(43) Date of publication of application:
**08.12.82 Bulletin 82/49**

(45) Publication of the grant of the patent:
**18.07.84 Bulletin 84/29**

(84) Designated Contracting States:
**DE FR GB**

(56) References cited:
**US - A - 3 387 506**
**US - A - 4 159 654**
**US - A - 4 252 031**
**US - A - 4 290 513**

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **Nishimura, Sadanori**
**299-10 Tsuchiya Omiya-shi**
**Saitama-ken (JP)**

(74) Representative: **MacFarlane, John Anthony Christopher et al,**
**HASELTINE LAKE & CO. Hazlitt House 28, Southampton Buildings Chancery Lane London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a transmission mechanism for a vehicle which is particularly suited for use in a front-engine front-wheel-drive motorcar in which the size of the transmission mechanism is largely restricted by the available layout space.

There has been hitherto described in US—A—4,252,031 and in GB—A—2,032,027, for instance, a transmission mechanism with parallel input and output shafts and three forward gear stages and one reverse gear stage. In this mechanism the input and output shafts, which are parallel with one another, are disposed in a transmission casing, supported rotatably by an outer wall and an intermediate wall of the casing. With respect to this outer wall a first speed driving train for low speed running is positioned to the rear of the intermediate wall. Between the intermediate wall and the outer wall just mentioned there are provided, in order in the direction from the intermediate wall to this outer wall, a reverse driving train, a second speed driving train for running at an intermediate speed, and a third speed driving train for high speed running. This mechanism is advantageous in that the shafts can be made small in diameter because the first speed driving train and the reverse driving train, which exert large bending forces on the shafts, are disposed near the intermediate wall and on each side thereof. Additionally, this mechanism is so arranged that, in order that a second speed clutch for making operative the second speed driving train provided on the input shaft may be used also as a clutch for making operative the reverse driving train, a reverse driving gear for the reverse driving train is fast with a second speed driving gear on the output side of the second speed clutch, and a second speed driven gear and a reverse driven gear which are meshed with the respective driving gears are arranged to be selectively engaged with the output shaft by operation of a selection mechanism provided between these two driven gears, and thereby a clutch exclusively for use to select reverse driving is omitted so that the axial dimension of the transmission mechanism as a whole is shortened by this extent. For increasing the number of change speed stages, a fourth speed driving train could be provided but if such a fourth speed driving train were simply added to the mechanism, the axial dimension of the mechanism would become too long. Also as at the time of forward running the second speed driving gear always rotates (because it is in mesh with the second speed driven gear that is, in this state, connected to the output shaft by the selection mechanism), further problems would arise. This is because the gear ratio between the driving and driven second speed gears is so set that at the time of high speed rotation of the output shaft with the fourth speed driving train operative, the second speed driving gear would rotate through the second speed driven gear at a higher speed than that of the output shaft, and the reverse driving train would also be given a high speed rotation through the reverse driving gear which is fast with the second speed driving gear. This high speed rotation of engaged gears would generate large noise, and if these gears are immersed in lubicating oil, there would also be large power loss caused by agitation resistance of the lubication oil. These problems would be particular severe in the reverse driving train in which there is interposed an idler between the driving gear and the driven gear.

According to the present invention there is provided a motor vehicle transmission mechanism comprising an input shaft and an output shaft provided in parallel with one another in a transmission casing, supported rotatably on an outer wall and an intermediate wall of the casing; a first speed driving train for low speed running provided to the rear of the intermediate wall with respect to the outer wall; and, in order in the direction from the intermediate wall towards the outer wall, a reverse driving train, a second speed driving train and a third speed driving train, the second and third speed driving trains being for vehicle running at progressively higher speeds and these trains and the reverse driving train being disposed between the intermediate wall and the outer wall; characterised in that a fourth speed driving train for vehicle running at highest speed is provided between the input shaft and the output shaft positioned between the second speed driving train and the reverse driving train; in that a double clutch having a first clutch mechanism and a second clutch mechanism is provided on the input shaft with the first clutch mechanism constituting a second speed clutch for the second speed driving train and the second clutch mechanism constituting a fourth speed clutch for the fourth speed driving train; in that a reverse driving gear for the reverse driving train is fast for rotation with a fourth speed driving gear on the output side of the fourth speed clutch; in that a fourth speed driven gear meshed with the fourth speed driving gear and a reverse driven gear meshed with the reverse driving gear through an idler gear are supported on the output shaft, and in that the fourth speed driven gear and the reverse driven gear are arranged to be selectively connected for rotation with the output shaft by operation of a selection mechanism provided between these two driven gears. This mechanism is provided with a fourth speed driving train and yet is of minimal axial extent. Furthermore the reverse driving train does not run at high speed during forward running with the fourth speed driving train operative, so that the noise and power loss problems which would be associated with a reverse driving train running at high speed under this condition are avoided.

For a better understanding of the invention and to show how the same may be carried into effect, reference will now be made, by way of example, to the accompanying drawings, in which:—

Figure 1 is a sectional side view of a motor vehicle transmission mechanism, and

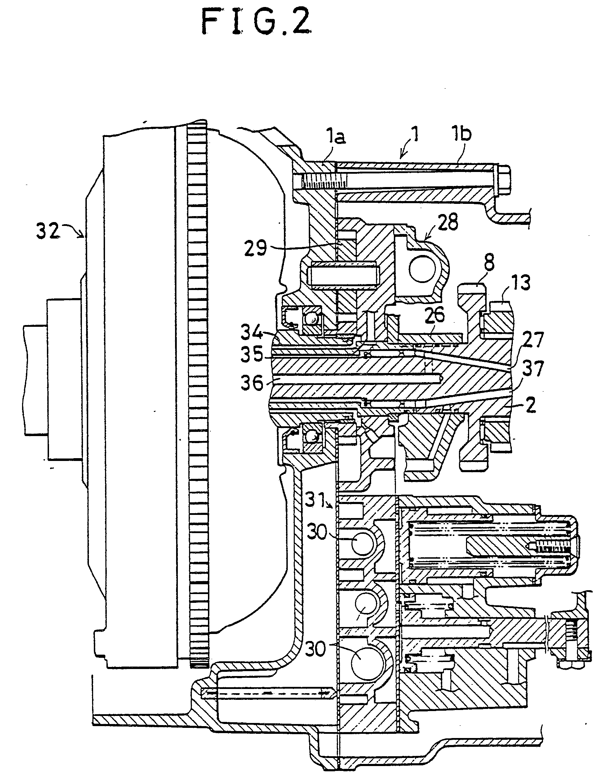

Figure 2 is a sectional view on line II—II in Figure 1.

In the Figures, numeral 1 denotes a transmission casing having an outer front wall 1a, an intermediate wall 1b and an outer rear wall 1c. Numerals 2 and 3 denote an input shaft and an output shaft respectively which are provided in parallel with one another in the casing 1, supported rotatably by the front wall 1a and the intermediate wall 1b of the casing 1. The input shaft 2 is connected to an internal combustion engine and the output shaft 3 is connected to driving road wheels of a vehicle. The transmission mechanism as a whole is particularly suited for use in a front-engine front-wheel-drive vehicle.

Between the two shafts 2, 3 a first speed driving train 4—1 for low speed running is provided positioned to the rear of the intermediate wall 1b with respect to the front wall 1a. Also provided between the two shafts, in order in the direction from the intermediate wall 1b towards the front wall 1a, are a reverse driving train 4—R, a second speed driving train 4—2 and a third speed driving train 4—3, the trains 4—2 and 4—3 being for running at progressively higher speeds. The positioning is such that the trains 4—R and 4—1 are disposed near the intermediate wall 1b, one on each side thereof.

In this mechanism there is additionally provided a fourth speed driving train 4—4 for highest speed running, this train 4—4 being positioned between the second speed driving train 4—2 and the reverse driving train 4—R.

The first speed driving train 4—1 includes a first speed clutch 5 on the input shaft 2, a first speed driving gear 6 on the output side and a first speed driven gear 7 meshed with the driving gear 6 and mounted on the output shaft 3. The third speed driving train 4—3 includes a third speed driving gear 8 fixed to the input shaft 2, a third speed driven gear 9 meshed with the driving gear 8 and a third speed clutch 10 mounted on the output shaft 3 for connecting the gear 9 to the output shaft 3.

A double clutch 11 having a front (first) clutch mechanism and a rear (second) clutch mechanism is provided on the input shaft 2. The front clutch mechanism is used as a second speed clutch 12, and thus the second speed driving train 4—2 includes this second speed clutch 12, a second speed driving gear 13 on the output side and a second speed driven gear 14 meshed with the driving gear 13 and mounted on the output shaft 3. The rear clutch mechanism of the double clutch 11 is used as a fourth speed clutch 15, and the fourth speed driving train 4—4 therefore includes the fourth speed clutch 15, a fourth speed driving gear 16 on the output side and a fourth speed driven gear 17 meshed with the driving gear 16 and mounted on the output shaft 3.

The construction of the double clutch 11 itself is known, see for instance US—A—2943503, US—A—3017006 and US—A—3098549.

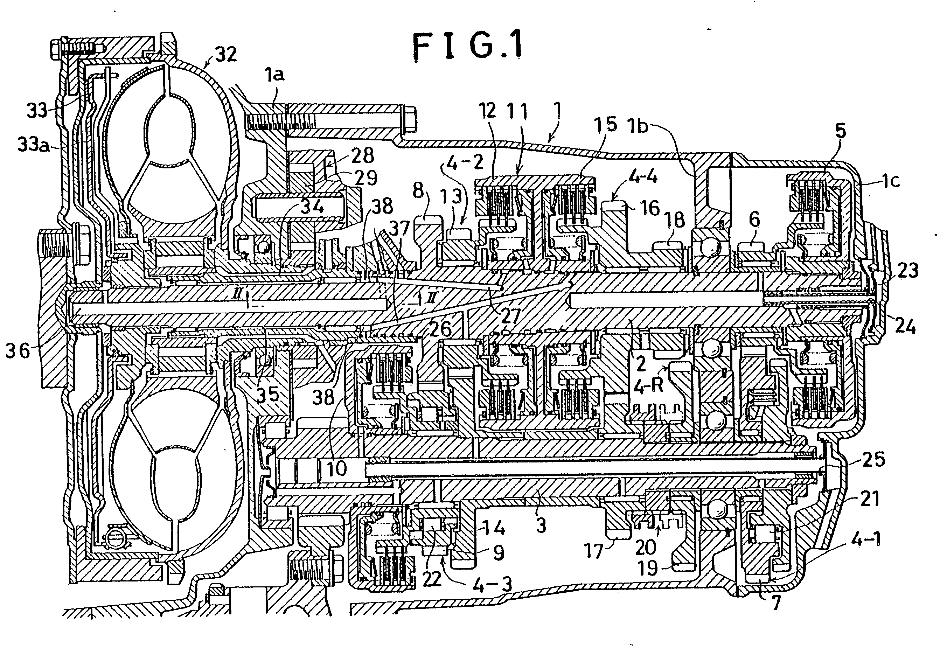

Additionally, a reverse driving gear 18 is integral with the fourth speed driving gear 16, so that the reverse driving gear train 4—R includes this reverse driving gear 18 and a reverse driven gear 19 which is meshed with an idler gear (not shown) that is in mesh with the driving gear 18. The driven gear 19 is mounted on the output shaft 3, the fourth speed driven gear 17 and the reverse driven gear 19 both being rotatably mounted on the output shaft 3. A selection mechanism 20 moveable between the two driven gears 17, 19 is operable to select either that the fourth speed driven gear 17 is made rotationally fast with the output shaft 3, this selection being made when the vehicle is to run forwardly, or that the reverse driven gear 19 is made rotationally fast with the output shaft 3 (the condition shown by dotted lines in Figure 1). This latter selection is made only when reverse driving is required.

In the illustrated example, a one-way clutch 21 is interposed in the first speed driving train 4—1 between the first speed driven gear 7 and the output shaft 3 for absorbing shock given by change-speed effected between the first speed and the second speed. Further, a one-way clutch 22 is interposed in the third speed driving train 4—3 between the third speed driven gear 9 and the third speed clutch 10 for absorbing shock given by change-speeds effected between the second, third and fourth speeds.

Further, in the illustrated example, inner and outer concentric first and second oil supply pipes 23, 24 inserted in an axial bore in the input shaft 2, and a third oil supply pipe 25 inserted in an axial bore in the output shaft 3, are provided that extend through the rear wall 1c of the transmission casing 1 so that the respective clutches 5, 15, 10 for the first, fourth and third speeds may be supplied with pressure oil through these oil supply pipes 23, 24, 25, and accordingly the axial length of the oil supply means is shorter than that of a seal ring form, such a form of seal being utilised, however, for the second speed clutch 12. Here a seal ring form of oil supply means using a seal ring 26 mounted on the input shaft 2 at its portion facing the third speed clutch 10 is adopted so that pressure oil may be supplied thereinto from an oil supply bore 27 in the input shaft 2, the oil passage length being kept to a minimum, and thereby the second speed clutch 12 is engaged promptly when oil is supplied thereinto and the engine braking effect caused by establishment of the second speed driving train 4—2 is facilitated.

In the drawings, numeral 28 denotes a block attached to the front wall 1a and on which are disposed a gear pump 29 serving as an oil pressure source, and respective control valves 30 for change speed control constituting an oil supply means 31. Thereby pressure oil may be supplied selectively to any of the oil supply pipes 23, 24, 25 and the oil supply bore 27. Numeral 32 denotes a torque convertor which is provided, on a portion of the input shaft 2 that protrudes forwards from the front wall 1a, so as to be interposed between the wall 1a and the engine. Numeral 33 denotes a direct-coupling clutch built into the torque convertor 32. Numerals 34 and 35 denote an oil supply passage and an oil discharge passage which connect between the interior space of the torque convertor 32 and the oil supply means 31. Numeral 36 denotes an oil passage for the direct coupling clutch which is formed by an axial bore in the input shaft 2 and which connects between a control chamber 33a of the direct coupling clutch 33 and the oil supply means 31. Numeral 37 denotes a lubrication oil passage in the input passage 2 for the double type clutch 11. This lubrication oil passage 37 is connected to the oil discharge passage 35 from the torque convertor 32 through an orifice member 38 so that lubrication of the double type clutch 11 may be effected by the discharge oil from the torque convertor 32.

The operation of the transmission mechanism is as follows:—

If the respective clutches 5, 12, 10, 15 for the first speed to the fourth speed are selectively supplied with oil, the respective driving trains for the first to the fourth speed are selectively established, and forward driving at a speed selected from the first to the fourth speed can be effected. If the fourth speed clutch 15 is supplied with oil and the selection mechanism 20 is changed over to the reverse side, the reverse driving train 4—R is established and reverse driving can be obtained.

The driving gear 18, the idler gear and the driven gear 19 of the reverse driving train 4—R are rotated at the time of establishment of the fourth speed driving train 4—4 with the mechanism 20 set for forward running but the rotation speed of the reverse driving gear 18 is limited to the rotation speed of the fourth speed driving gear 16 which is integral therewith, that is, the rotation speed of the input shaft 2. When any of the driving trains 4—1, 4—2, 4—3 for the first speed to the third speed are established, the reverse driving gear 18 is rotated by the rotation of the output shaft 3 through the fourth speed driven gear 17 and the fourth speed driving gear 16, but the rotation speed thereof is always limited to a speed lower than the rotation speed of the input shaft 2 owing to the relation between the gear ratio of the fourth speed driving train 4—4 and that of any of the other driving trains 4—1, 4—2, 4—3 for the first speed to the third speed.

As discussed above, in the known transmission mechanism, the reverse driving gear (18 in the present mechanism) is fast with the second speed driving gear (13 in the present mechanism) in order that the second speed clutch (12 in the present mechanism) may be used also as the clutch for the reverse driving train, and in such mechanism at the time of high speed driving caused by the establishment of a driving train higher than the second speed train, the reverse driving gear rotates at a higher speed than the rotation speed of the output shaft which is higher than that of the input shaft. In the present mechanism, however, the rotation speed of the reverse driving gear 18 is always limited to be lower than the rotation speed of the input shaft 2, and generation of engagement noises between respective gears caused by high speed rotation of the reverse driving train 4—R, and power loss caused by agitation resistance of lubication oil, is minimised as much as possible.

By the use of the double clutch to constitute the respective clutches for the second speed and the fourth speed, the transmission mechanism can be made shorter in its axial direction than would be the case if a clutch for the fourth speed was independently provided, and in the present mechanism this advantage is obtained whilst also using the fourth speed clutch as the clutch for the reverse driving train as well, the reverse driving gear being integral with the fourth speed driving gear on the output side of the fourth speed clutch, so that the axial length can be shortened as a result of omitting a clutch used exclusively for reverse driving.

## Claims

1. A motor vehicle transmission mechanism comprising an input shaft (2) and an output shaft (3) provided in parallel with one another in a transmission casing (1), supported rotatably on an outer wall (1a) and an intermediate wall (1b) of the casing; a first speed driving train (4—1) for low speed running provided to the rear of the intermediate wall (1b) with respect to the outer wall (1a); and, in order in the direction from the intermediate wall (1b) towards the outer wall (1a), a reverse driving train (4—R), a second speed driving train (4—2) and a third speed driving train (4—3), the second and third speed driving trains being for vehicle running at progressively higher speeds and these trains and the reverse driving train being disposed between the intermediate wall (1b) and the outer wall (1a); characterised in that a fourth speed driving train (4—4) for running at highest speed is provided between the input shaft (2) and the output shaft (3) positioned between the second speed driving train (4—2) and the reverse driving train (4—R); in that a double clutch (11) having a first clutch mechanism and a second clutch mechanism is provided on the input shaft (2) with the first clutch mechanism constituting a second speed clutch (12) for the second speed driving train (4—2) and the second clutch mechanism constituting a fourth speed clutch (15) for the fourth speed driving train (4—4); in that a reverse driving gear (18) for the reverse driving train (4—R) is fast for rotation with a fourth speed driving gear (16) on the output side of the fourth speed clutch (15); in that a fourth speed driven gear (17) meshed with the fourth speed driving gear (16) and a reverse driving gear (19) meshed with the reverse driving gear (18) through an idler gear are supported on the output shaft (3); and in that the fourth speed driven gear (17) and the reverse driven gear (19) are arranged to be selectively connected for rotation with the output shaft (3) by operation of a selection mechanism (20) provided between these two driven gears (17, 19).

2. A transmission mechanism as claimed in claim 1, wherein a torque convertor (32) and a direct coupling clutch (33) are provided outside said outer wall (1a).

3. A transmission mechanism as claimed in claim 1 or 2, wherein the double clutch (11) is arranged to be supplied with operation oil directly through an end of the input shaft (2) from an oil supply means (31) provided on said outer wall (1a).

## Revendications

1. Mécanisme de transmission pour véhicule automobile comprenant un arbre d'entrée (2) et un arbre de sortie (3) prévus parallèlement l'un à l'autre dans un carter de transmission (1) tourillonnant sur une paroi extérieure (1a) et sur une paroi intermédiaire (1b) du carter; un train d'entraînement en première vitesse (4—1) pour marche à faible vitesse prévu à l'arrière de la paroi intermédiaire (1b) par rapport à la paroi extérieure (1a) et, dans l'ordre, dans le sens allant de la paroi intermédiaire (1b) vers la paroi extérieure (1a), un train d'entraînement en marche arrière (4—R), un train d'entraînement en seconde vitesse (4—2) et un train d'entraînement en troisième vitesse (4—3), les trains d'entraînement en seconde et en troisième vitesses étant prévus pour la marche du véhicule à des vitesses croissant progressivement et ces trains et le train d'entraînement en marche arrière étant disposés entre la paroi intermédiaire (1b) et la paroi extérieure (1a), caractérisé en ce qu'un train d'entraînement en quatrième vitesse (4—4) pour la marche du véhicule à la vitesse maximale est prévu entre l'arbre d'entrée (2) et l'arbre de sortie (3) et interposé entre le train d'entraînement en seconde vitesse (4—2) et le train d'entraînement en marche arrière (4—R), en ce qu'un double embrayage (11) possédant un premier mécanisme d'embrayage et un second mécanisme d'embrayage est prévu sur l'arbre d'entrée (2), le premier mécanisme d'embrayage constituant un embrayage de seconde vitesse (12) pour le train d'entraînement en seconde vitesse (4—2) et le second mécanisme d'embrayage constituant un embrayage de quatrième vitesse (15) pour le train d'entraînement en quatrième vitesse (4—4), en ce qu'un pignon menant de marche arrière (18) affecté au train d'entraînement en marche arrière (4—R) est solidaire en rotation d'un pignon menant de quatrième vitesse (16) situé sur le côté sortie de l'embrayage de quatrième vitesse (15), en ce qu'un pignon mené de quatrième vitesse (17) en prise avec le pignon menant de quatrième vitesse (16) et un pignon mené de marche arrière en prise avec le pignon menant de marche arrière (18) par l'intermédiaire d'un pignon fou sont supportés sur l'arbre de sortie (3), et en ce que le pignon mené de quatrième vitesse (17) et le pignon mené de marche arrière (19) sont agencés pour être sélectivement accouplés à l'arbre de sortie (3) pour tourner avec lui sous l'action d'un mécanisme de sélection (20) prévu entre ces deux pignons menés (17, 19).

2. Mécanisme de transmission selon la revendication 1, caractérisé en ce qu'un convertisseur de couple (32) et un embrayage d'accouplement direct (33) sont prévus à l'extérieur de ladite paroi extérieure (1a).

3. Mécanisme de transmission selon la revendication 1 ou 2, caractérisé en ce que le double embrayage (11) est agencé pour être directement alimenté en huile de manoeuvre à travers une extrémité de l'arbre d'entrée (2) à partir d'un moyen d'alimentation en huile (31) prévu sur ladite paroi extérieure (1a).

## Patentansprüche

1. Getriebe für ein Motorfahrzeug, mit einer Eingangswelle (2) und einer Ausgangswelle (3), die in einem Getriebegehäuse (1) parallel zueinander angeordnet und in der Außenwand (1a) und in einer Zwischenwand (1b) des Gehäuses drehbar gelagert sind, wobei ein erster Getrieberädersatz (4—1) für den Betrieb mit niedriger Drehzahl bezogen auf die Außenwand (1a) hinter der Zwischenwand (1b) und, in Richtung von der Zwischenwand (1b) zur Außenwand (1a), aufeinanderfolgend ein Umkehr-Getrieberädersatz (4—R), ein zweiter Getrieberädersatz (4—2) und ein dritter Getrieberädersatz (4—3) vorgesehen sind, wobei der zweite und der dritte Getrieberädersatz für den Antrieb des Fahrzeugs mit zunehmend höheren Geschwindigkeiten dienen und diese Getrieberädersätze und der Umkehr-Getrieberädersatz zwischen der Zwischenwand (1b) und der Außenwand (1a) vorgesehen sind, dadurch gekennzeichnet, daß zwischen der Eingangswelle (2) und der Ausgangswelle (3) ein zwischen dem zweiten Getrieberädersatz (4—2) und dem Umkehr-Getrieberädersatz (4—R) angeordneter vierter Getrieberädersatz (4—4) vorgesehen ist, daß auf der Eingangswelle (2) eine einen ersten Kupplungsmechanismus und einen zweiten Kupplungsmechanismus aufweisende Doppelkupplung (11) vorgesehen ist und der erste Kupplungsmechanismus für den zweiten Getrieberädersatz (4—2) eine Kupplung (12) für den zweiten Gang und der zweite Kupplungsmechanismus für den vierten Getrieberädersatz (4—4) eine Kupplung (15) für den vierten Gang bildet, daß ein Umkehrgetriebezahnrad (18) für den Umkehr-Getrieberädersatz (4—R) drehfest mit einem an der Ausgangsseite der Kupplung (15) für den vierten Gang vorgesehenen Antriebszahnrad (16) für den vierten Gang verbunden ist, daß ein mit dem Antriebszahnrad (16) des vierten Ganges in Eingriff stehendes angetriebenes Zahnrad des vierten Ganges und ein mit dem Antriebszahnrad (18) des Rückwärtsganges in Eingriff stehendes angetriebenes Zahnrad (19) des Rückwärtsganges auf der Ausgangswelle (3) über ein fliegend gelagertes Zahnrad abgestützt sind und daß das angetriebene Zahnrad (17) des vierten Ganges und das angetriebene Zahnrad (19) des Rückwärtsganges so angeordnet sind, daß sie durch Bedienen eines zwischen diesen beiden angetriebenen Zahnrädern (17, 19) angeordneten Wählmechanismus (20) wahlweise mit der Ausgangswelle (3) drehfest verbunden werden können.

2. Getriebe nach Anspruch 1, worin außerhalb der Außenwand (1a) ein Drehmomentwandler (32) und eine Kupplung (33) für direktes Einkuppeln vorgesehen sind.

3. Getriebe nach Anspruch 1 oder 2, worin die Doppel-Kupplung (11) so angeordnet ist, daß sie über ein Ende der Eingangswelle (2) von einer auf der Außenwand (1a) vorgesehenen Ölversorgungseinrichtung (31) her direkt mit Steueröl versorgt werden kann.

# FIG.1

0 066 381

# FIG.2